(19) Europäisches Patentamt
European Patent Office
Office européen des brevets

(11) **EP 2 472 876 A2**

(12) **EUROPEAN PATENT APPLICATION**

(43) Date of publication:
**04.07.2012 Bulletin 2012/27**

(51) Int Cl.:
***H04N 9/64*** *(2006.01)*     *H04N 5/208* *(2006.01)*

(21) Application number: **12150177.9**

(22) Date of filing: **04.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.01.2011 KR 20110000685**

(71) Applicants:
• **Samsung Electronics Co., Ltd.
Suwon-si, Gyeonggi-do 442-742 (KR)**
• **Inha-Industry Partnership Institute
Incheon (KR)**

(72) Inventors:
• **Min, Byung-Seok
442-742 Gyeonggi-do (KR)**
• **Park, Hyun-Hee
442-742 Gyeonggi-do (KR)**

• **Lee, Min-Woo
442-742 Gyeonggi-do (KR)**
• **Kim, Jin-Ho
442-742 Gyeonggi-do (KR)**
• **Kim, Choon-Woo
Incheon (KR)**
• **Lee, Yoon-Gyoo
Incheon (KR)**
• **Kim, Gah-Hee
Incheon (KR)**
• **Kim, Han-Eol
Incheon (KR)**
• **Kang, Yoo-Jin
Incheon (KR)**

(74) Representative: **Jenkins, Richard Gavin
Harrison Goddard Foote
Saviour House
9 St Saviourgate
York, Yorkshire YO1 8NQ (GB)**

(54) **Apparatus and method for improving image quality based on definition and chroma**

(57)     An apparatus and method for improving image quality based on definition and chroma are provided. The method includes analyzing an input image; calculating a quantified definition value and a quantified chroma value of the input image; determining a definition parameter corresponding to the quantified definition value and a chroma parameter corresponding to the quantified chroma value; and applying the determined definition parameter and the determined chroma parameter to a frame of the input image.

FIG.1

EP 2 472 876 A2

**Description**

**BACKGROUND OF THE INVENTION**

1. Field of the Invention

The present invention relates generally to an apparatus and method for improving image quality, and more particularly, improving image quality based on definition and chroma.

2. Description of the Related Art

There are several different methods used to improve image quality. One is a method of quantifying definition and noise level of an image and determining quality improvement parameters depending on the quantified values. This method quantifies definition of an image using a histogram of a grayscale difference between an original image and a low-pass filtered image. Additionally, the method detects and reduces block and ringing noises in an input image, and analyzes the occurrence of noise in the image by calculating a difference between the noise-reduced image and the original image. Thereafter, the method adjusts the quality improvement parameters depending on the analyzed definition and noise occurrence, thereby improving the image quality.

Another method analyzes a genre of an image, and applies predefined quality improvement parameters depending on that genre. Upon receiving frames, this method classifies them into five genres according to the luminance distribution histogram. The five genres include sports, music, movies, drama and animation. Thereafter, the method improves the contrast by performing gamma correction according to the gamma curve corresponding to a ratio of output brightness to input brightness, which is predefined based on the classified genres. However, even the same scenes may be classified as different genres in different frames. To solve this problem, the method detects scene switching, stores classification results of previous frames, and corrects the classification results of the current frame.

Another method divides a target image into non-overlapping blocks, classifies the blocks into four different types (i.e., blocks having a distinct edge, blocks having many detailed components, blocks having some detailed components, and other blocks) based on the strength of edges and the amount of detailed components, and performs definition improvement filtering of different strengths.

The conventional image quality improvement method analyzes genres of images and applies predefined quality improvement parameters based on the genre, causing inconvenience that it should accurately distinguish the genres. Further, images in multiple frames of the same genre may have different image characteristics such as definition and chroma. Therefore, when the same quality improvement parameters are applied to the frames, the quality improvement may be insignificant, or the quality of the images may degrade.

Additionally, since image characteristics are analyzed and quality improvement parameters are set according to the analyzed image characteristics, it is inconvenient for a noise detection and quantification method and a noise reduction method to be defined Conventionally, it is inconvenient for defining the noise detection and quantification method and the noise reduction method since the noise detection and quantification method and the noise reduction method were not defined.

**SUMMARY OF THE INVENTION**

Accordingly, the present invention has been made to solve the above-stated problems occurring in the prior art, and an aspect of the present invention is to provide an apparatus and method for determining image characteristics of frames of an image, classifying the frames into different grades, and applying different quality improvement techniques to the frames according to the classified grades, thereby providing the best image quality.

In accordance with one aspect of the present invention, an apparatus for improving image quality based on definition and chroma is provided. The apparatus includes an image analyzer for analyzing an input image; a quantification unit for calculating a quantified definition value and a quantified chroma value of the input image; a parameter determiner for determining a definition parameter corresponding to the quantified definition value and a chroma parameter corresponding to the quantified chroma value; and

a parameter applier for applying the determined definition parameter and the determined chroma parameter to a frame of the input image.

In accordance with another aspect of the present invention, a method for improving image quality based on definition and chroma is provided. The method includes analyzing an input image; calculating a quantified definition value and a quantified chroma value of the input image; determining a definition parameter corresponding to the quantified definition value and a chroma parameter corresponding to the quantified chroma value; and

applying the determined definition parameter and the determined chroma parameter to a frame of the input image..

**BRIEF DESCRIPTION OF THE DRAWINGS**

The above and other aspects, features and advantages of certain embodiments of the present invention will be more apparent from the following description taken in conjunction with the accompanying drawings, in which:

FIG. 1 illustrates an apparatus for improving image quality according to an embodiment of the present invention;
FIG. 2 illustrates a flowchart for improving image quality according to an embodiment of the present invention;
FIG. 3 illustrates a flowchart for quantifying definition in a definition quantification unit according to an embodiment of the present invention; FIG. 4 illustrates a flowchart for quantifying chroma in a chroma quantification unit according to an embodiment of the present invention;
FIG. 5 illustrates a flowchart for determining parameters for improving image quality in a parameter determiner according to an embodiment of the present invention; and
FIG. 6 illustrates a flowchart for applying the determined applicable parameters to an image in a parameter applier according to an embodiment of the present invention.

**DETAILED DESCRIPTION OF EMBODIMENTS OF THE PRESENT INVENTION**

Embodiments of the present invention will now be described in detail with reference to the accompanying drawings. In the following description, specific details such as detailed configuration and components are provided to assist the overall understanding of embodiments of the present invention. Therefore, it should be apparent to those skilled in the art that various changes and modifications of the embodiments described herein can be made without departing from the scope and spirit of the invention. Additionally, descriptions of well-known functions and constructions are omitted for clarity and conciseness.

An embodiment of the present invention quantifies definition and chroma of an image depending on whether a person image (or a face image) is a part of the image, classifies frames of the image into different grades depending on the quantified values and whether a person image is included, and performs different quality improvements based on the classified grades.

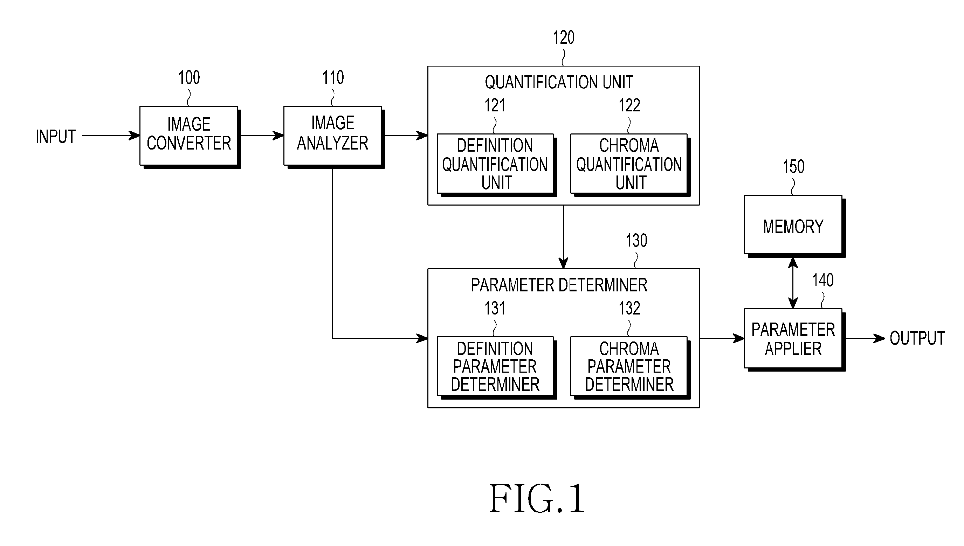

FIG. 1 illustrates a structure of an apparatus for improving image quality according to an embodiment of the present invention.

The image quality improvement apparatus includes an image converter 100, an image analyzer 110, a quantification unit 120 with a definition quantification unit 121 and a chroma quantification unit 122, a parameter determiner 130 with a definition parameter determiner 131 and a chroma parameter determiner 132, a parameter applier 140, and a memory 150.

The image converter 100 converts an input image from a Red-Green-Blue (RGB) color image into an YCbCr color image, and converts the input image into a Lightness-Chroma-Hue (LCH) color image.

The image converter 100 converts an RGB image into an YCbCr image using Equation (1) below, and converts the RGB image into an LCH image using Equation (2) below.

$$Y = 0.2990 \times R + 0.5870 \times G + 0.1140 \times B$$
$$Cb = -0.1687 \times R - 0.3313 \times G + 0.5000 \times B \dots \dots (1)$$
$$Cr = 0.5000 \times R - 0.4187 \times G - 0.0813 \times B$$

$$L = 116 \times f\left(\frac{Y}{Y_0}\right) - 16$$

$$C = \sqrt{a^2 + b^2}$$

$$H = \arctan\left(\frac{b}{a}\right)$$

$$X = 0.4124 \times R + 0.3576 \times G + 0.1805 \times B$$

$$Y = 0.2126 \times R + 0.7152 \times G + 0.0722 \times B$$

$$Z = 0.0193 \times R + 0.1192 \times G + 0.9505 \times B$$

$$a = 500 \times \left( f\left(\frac{X}{X_0}\right) - f\left(\frac{Y}{Y_0}\right) \right)$$

$$b = 200 \times \left( f\left(\frac{Y}{Y_0}\right) - f\left(\frac{Z}{Z_0}\right) \right) \qquad \ldots\ldots\ldots (2)$$

$$f(x) = \begin{cases} x^{1/3} & x > 0.008856 \\ 7.787x + \dfrac{16}{116} & x \leq 0.008856 \end{cases}$$

where R, G and B represent grayscale values of different channels of an input image.

The image analyzer 110 determines if the input image is a person image by analyzing the input image using the skin color that is determined from colors extracted from multiple skin color images in a CbCr color area.

Specifically, the image analyzer 110 calculates a ratio of pixels corresponding to the predetermined skin color of the input image, and determines the input image as a person image if the calculated ratio is greater than or equal to a preset threshold value to determine a person image.

The image analyzer 110 calculates a ratio of pixels corresponding to the skin color using Equation (3) below, and determines whether the calculated ratio is greater than or equal to the threshold.

$$\begin{aligned} &-7 < Cr + Cb < 13 \;\; \& \;\; 1 < Cr - Cb < 75 \;\; \& \\ &Cr - Cb > TH \mid Cr - Cb < -TH \mid Cr + Cb > TH \mid Cr + Cb < -TH \end{aligned} \quad \ldots (3)$$

where TH is a value for excluding colorless data from the determined skin color data.

The quantification unit 120 includes the definition quantification unit 121 for quantifying definition of the input image, and the chroma quantification unit 122 for quantifying chroma of the input image. The "quantification" refers to determining definition and chroma levels of an input image in numerical values.

The definition quantification unit 121 calculates a quantified definition value by performing edge detection on a Y channel of the input image in vertical and horizontal directions using a Sobel filter, and dividing a sum of the values filtered by the Sobel filter by the size of the input image. If the sum of the values output by edge detection is defined as edge strength, the definition quantification unit 121 calculates an sum of edge strengths obtained by adding edge strengths which are greater than or equal to a preset value, and calculates a quantified definition value by dividing the calculated sum of edge strengths by the image size. The definition quantification unit 121 classifies an area where edge strength is less than the preset value, as an edgeless smooth area, and does not use this area to calculate quantified values.

The definition quantification unit 121 calculates a quantified value using Equation (4):

$$M_s = \frac{1}{H \times W} \sum_{i=0}^{H-1} \sum_{j=0}^{W-1} \text{Sobel}_{i,j}$$

$$\text{Sobel}_{i,j} = \begin{cases} \text{Sobel}_{i,j} & \text{if } \text{Sobel}_{i,j} \geq 30 \\ 0 & \text{otherwise} \end{cases} \quad \cdots\cdots\cdots (4)$$

where $M_s$ represents a quantified definition value, W and H represent horizontal and vertical lengths of an input image, respectively, and $\text{Sobel}_{i,j}$ represents a sum of horizontal and vertical Sobel filtering at a given pixel position (i,j).

The chroma quantification unit 122 distinguishes pixel colors in color values of pixels of the input image, and calculates an average of chroma corresponding to the distinguished pixel colors. The pixel colors may be distinguished in six colors, using a hue (H) angle. Pixel colors may be distinguished as red for H = 330° - 37°, yellow for H = 37° - 103°, green for H = 103° - 136°, cyan for H = 136° - 197°, blue for H = 197° - 307°, and magenta for H = 307° - 330°. The chroma quantification unit 122 calculates a quantified chroma value for each distinguished color by dividing the sum of chroma of pixels whose Chroma (C) is greater than or equal to a preset value, by the number of pixels of the distinguished colors. The chroma quantification unit 122 considers a pixel whose chroma is less than a preset value, as a colorless pixel, and does not use it in calculating the quantified value.

The chroma quantification unit 122 calculates a quantified chroma value using Equation (5) below.

$$M_s = \frac{1}{H \times W} \sum_{i=0}^{H-1} \sum_{j=0}^{W-1} \text{Sobel}_{i,j}$$

$$\text{Sobel}_{i,j} = \begin{cases} \text{Sobel}_{i,j} & \text{if } \text{Sobel}_{i,j} \geq 30 \\ 0 & \text{otherwise} \end{cases} \quad \cdots\cdots\cdots (5)$$

where k represents the six different colors, $M_c(k)$ represents a quantified chroma value of a color of k, pixel_num(k) represents the number of k-color pixels in an image, $C_{i,j}$ represents a chroma value in a pixel position (i,j), and W and H represent horizontal and vertical lengths of an input image, respectively.

The parameter determiner 130 includes the definition parameter determiner 131 and the chroma parameter determiner 132.

The definition parameter determiner 131 determines a quantification parameter corresponding to definition of the input image using a preset quantification value comparison parameter reference table, for definition, and the chroma parameter determiner 132 determines a quantification parameter corresponding to chroma of the input image using a preset quantification value comparison parameter reference table, for chroma. The quantification value comparison parameter reference table refers to a table in which parameters are set to correspond to multiple quantified values.

If the input image is a person image, the parameter determiner 130 determines a definition parameter and a chroma parameter for a person image using a 7-step quantification value comparison parameter reference table. Herein, a example of "7-step quantification value comparison parameter reference table" is shown in <Table 1> as below:

<Table 1>

| definition quantization value | definition improvement parameter |
|---|---|
| 0 | 3.5 |
| 30 | 3.5 |
| 85 | 3.0 |
| 125 | 2.5 |
| 160 | 2.0 |
| 205 | 1.5 |
| 240 | 1.0 |
| 420 | 1.0 |

However, if the input image is not a person image, the parameter determiner 130 determines, as quantification parameters, a value of a 6-step quantification value comparison parameter reference table corresponding to the quantified value, and a linear interpolation parameter calculated by linear interpolation.

Herein, a example of "6-step quantification value comparison parameter reference table" is shown in <Table 2> as below:

<Table 2>

| chroma quantization value | chroma improvement parameter | | | | | |
|---|---|---|---|---|---|---|
| | Red | Cyan | Magenta | Green | Yellow | Blue |
| 0 | 1 .3 | 1 .3 | 1 .3 | 0 .5 | 0 .4 | 0 .4 |
| 15 | 1 .3 | 1 .3 | 1 .3 | 0 .5 | 0 .4 | 0 .4 |
| 25 | 1 .1 | 1 .1 | 1 .1 | 0 .4 | 0 .3 | 0 .3 |
| 30 | 0 .9 | 0 .9 | 0 .9 | 0 .3 | 0 .2 | 0 .2 |
| 40 | 0 .7 | 0 .7 | 0 .7 | 0 .2 | 0 .1 | 0 .1 |
| 55 | 0 .5 | 0 .5 | 0 .5 | 0 .1 | 0 .0 | 0 .0 |
| 80 | 0 .5 | 0 .5 | 0 .5 | 0 .1 | 0 .0 | 0 .0 |

The quantification value comparison parameter reference table was determined by experiments based on distribution of quantified values.

The parameter applier 140 improves quality by applying the determined quantification parameters to frames of the input image. The parameter applier 140 may immediately apply the quantification parameters to the current frame, or may apply the quantification parameters to the next frame. When immediately applying the determined quantification parameters to the current frame, the parameter applier 140 stores information about the current frame in the memory 150.

When the parameter applier 140 applies the determined quantification parameters to the next frame, screen flickering may occur due to the difference in quality between the current frame and the next frame. To avoid this, the parameter applier 140 adds parameters calculated from a preset number of frames, calculates an average of the added parameters, and applies it to the next frame. As the parameter applier 140 uses an average of the added parameters in this way, quality improvement parameters may change slowly despite the screen switching abruptly, reducing the screen flickering.

The parameter applier 140 may apply parameters determined using Equation (6) to frames. Equation (6) is an equation for adding 16 parameters of frames and calculating an average of the added parameters.

$$P^{'} = \alpha \cdot \sum_{i=1}^{16} P_i \ldots \ldots \ldots (6)$$

where $P_i$ represents 16 added parameters, P' represents a parameter value to be applied to the next frame, and $\alpha$ is a factor for reflecting the display characteristics or the quality of the input image itself. If the definition or chroma performance of the display is excellent, the parameter applier 140 decreases a value of $\alpha$, preventing quality degradation due to excessive quality improvement, and if the display performance is poor, the parameter applier 140 increases a value of $\alpha$, improving the image quality.

Moreover, in the case of an input image such as Digital Multimedia Broadcasting (DMB) image having low resolution and having a large amount of noise due to compression, the improved definition may emphasize the noise. Thus, the parameter applier 140 may prevent quality degradation due to the noise emphasis by decreasing the value of $\alpha$.

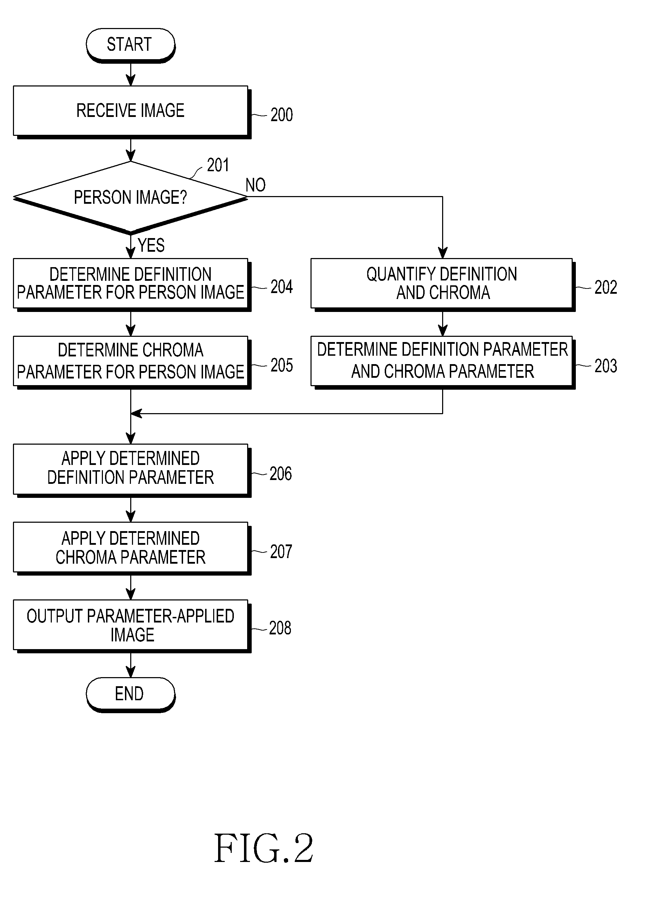

FIG. 2 illustrates a flowchart for improving image quality according to an embodiment of the present invention.

Upon receiving an image in step 200, the image analyzer 110 analyzes the input image using a predetermined skin color and determines in step 201 whether the input image is a person image. If the input image is a person image, the image quality improvement apparatus proceeds to step 204. Otherwise, the quantification unit 120 quantifies definition and chroma of the input image in step 202. The image analyzer 110 calculates a ratio of pixels corresponding to a predetermined skin color of the input image, and determines the input image as a person image if the calculated ratio is greater than or equal to a threshold that is preset to determine a person image.

In the quantification unit 120, the definition quantification unit 121 performs definition quantification and the chroma quantification unit 122 performs chroma quantification.

In step 203, the parameter determiner 130 determines quantification parameters corresponding to definition and chroma of the input image using a preset quantification value comparison parameter reference table.

If the input image is a person image in step 201, the parameter determiner 130 determines definition and chroma parameters for a person image using a 7-step quantification value comparison parameter reference table in steps 204 and 205.

In steps 206 and 207, the parameter applier 140 performs quality improvement on the input image by applying the determined definition and chroma parameters to frames of the input image.

In step 208, the parameter applier 140 outputs the image, to which the definition and chroma parameters are applied, completing the quality improvement process.

Thus, the present invention quantifies definition and chroma based on whether the input image is a person image, and performs quality improvement for the definition and chroma according to the quantified values, thus optimizing the quality of the output image.

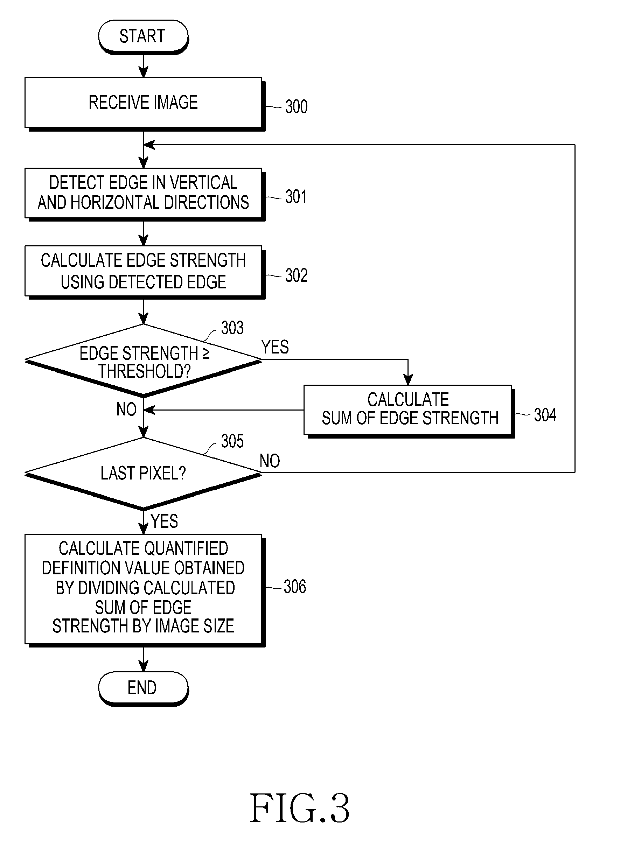

FIG. 3 illustrates a flowchart for quantifying definition in a definition quantification unit according to an embodiment of the present invention.

Upon receiving an image in step 300, the definition quantification unit 121 performs edge detection on a Y channel of the input image in vertical and horizontal directions in step 301.

In step 302, the definition quantification unit 121 calculates edge strength based on the edge detected in the vertical and horizontal directions. The edge strength represents a sum of the values output by the edge detection.

In step 303, the definition quantification unit 121 determines if the calculated edge strength is greater than or equal to a preset threshold. If so, the definition quantification unit 121 calculates a sum of edge strengths in step 304. Otherwise, the definition quantification unit 121 proceeds to step 305.

In step 305, the definition quantification unit 121 determines if edge detection has been performed on up to the last pixel of the image. If so, the definition quantification unit 121 performs step 306. Otherwise, the definition quantification unit 121 returns to step 301 to perform edge detection in the vertical and horizontal directions, and then performs steps 302 to 305.

In step 306, the definition quantification unit 121 calculates a quantified definition value obtained by dividing the calculated sum of edge strengths by the image size, completing the definition quantification process.

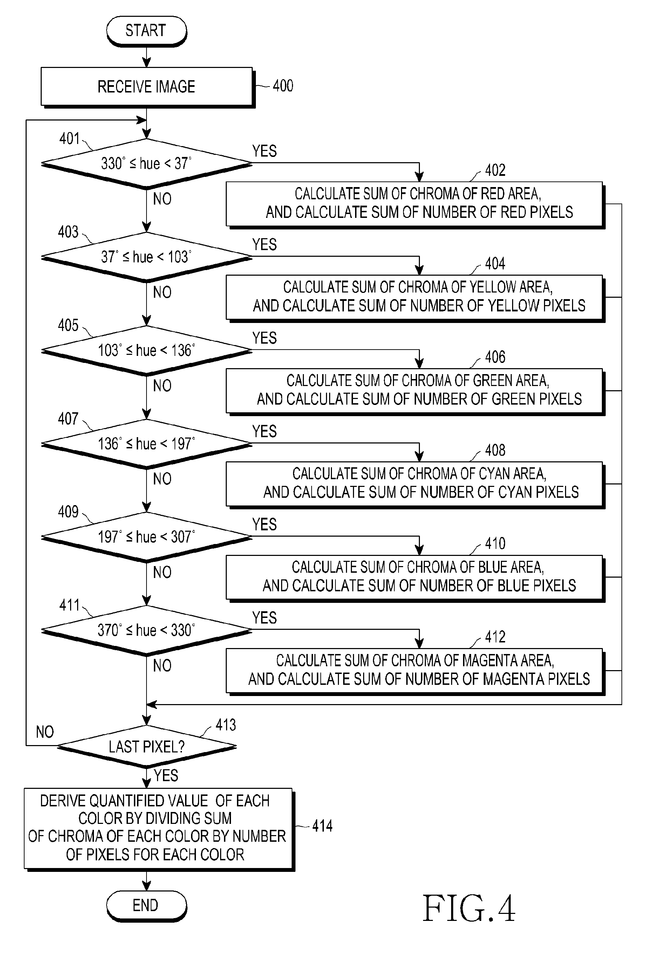

FIG. 4 illustrates a flowchart for quantifying chroma in a chroma quantification unit according to an embodiment of the present invention.

Upon receiving an image in step 400, the chroma quantification unit 122 determines in step 401 whether a hue value is greater than or equal to 330° and less than 37°. If it is, the chroma quantification unit 122 calculates a sum of chroma of a red area and calculates a sum of the number of red pixels in step 402. Otherwise, the chroma quantification unit 122 proceeds to step 403.

In step 403, the chroma quantification unit 122 determines if the hue value is greater than or equal to 37° and less than 103°. If it is, the chroma quantification unit 122 calculates a sum of chroma of a yellow area and calculates a sum of the number of yellow pixels in step 404. Otherwise, the chroma quantification unit 122 proceeds to step 405.

In step 405, the chroma quantification unit 122 determines if the hue value is greater than or equal to 103° and less than 136°. If it is, the chroma quantification unit 122 calculates a sum of chroma of a green area and calculates a sum of the number of green pixels in step 406. Otherwise, the chroma quantification unit 122 proceeds to step 407.

In step 407, the chroma quantification unit 122 determines if the hue value is greater than or equal to 136° and less than 197°. If it is, the chroma quantification unit 122 calculates a sum of chroma of a cyan area and calculates a sum of the number of cyan pixels in step 408. Otherwise, the chroma quantification unit 122 proceeds to step 409.

In step 409, the chroma quantification unit 122 determines if the hue value is greater than or equal to 197° and less than 307°. If it is, the chroma quantification unit 122 calculates a sum of chroma of a blue area and calculates a sum of the number of blue pixels in step 410. Otherwise, the chroma quantification unit 122 proceeds to step 411.

In step 411, the chroma quantification unit 122 determines if the hue value is greater than or equal to 307° and less than 330°. If so, the chroma quantification unit 122 calculates a sum of chroma of a magenta area and calculates a sum of the number of magenta pixels in step 412. Otherwise, the chroma quantification unit 122 proceeds to step 413.

In step 413, the chroma quantification unit 122 determines whether the hue value has been determined for up to the last pixel. If it is, the chroma quantification unit 122 proceeds to step 414. Otherwise, the chroma quantification unit 122 returns to step 401 and repeats its succeeding steps 402 to 413.

In step 414, the chroma quantification unit 122 calculates a quantified chroma value for each color by dividing the sum of chroma of each color by the sum of the number of each color.

For example, the chroma quantification unit 122 calculates a quantified red value by dividing the sum of chroma of the red area by the sum of the number of red pixels, calculates a quantified yellow value by dividing the sum of chroma of the yellow area by the sum of the number of yellow pixels, and calculates a quantified green value by dividing the sum of chroma of the green area by the sum of the number of green pixels.

Furthermore, the chroma quantification unit 122 calculates a quantified cyan value by dividing the sum of chroma of the cyan area by the sum of the number of cyan pixels, calculates a quantified blue value by dividing the sum of chroma of the blue area by the sum of the number of blue pixels, and calculates a quantified magenta value by dividing the sum of chroma of the magenta area by the sum of the number of magenta pixels.

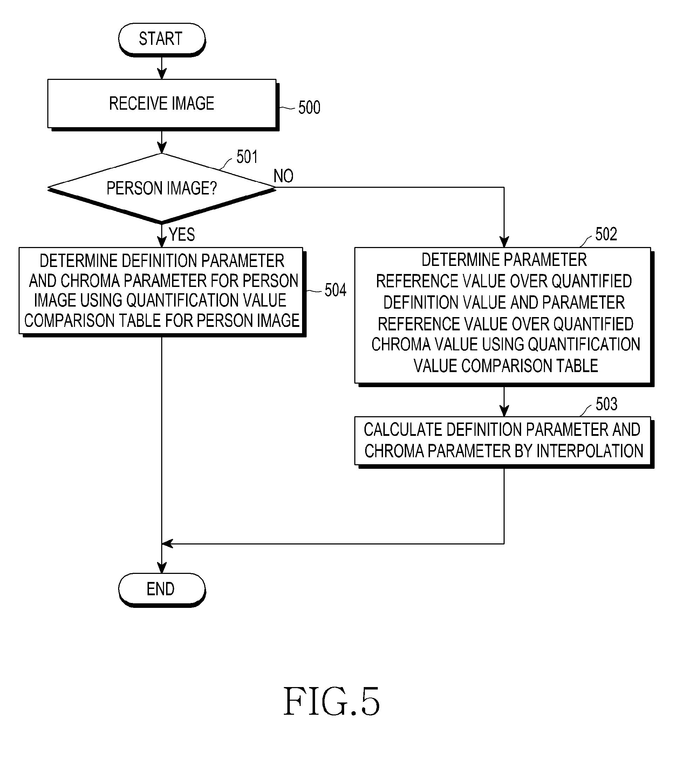

FIG. 5 illustrates a flowchart for determining parameters for improving image quality in a parameter determiner according to an embodiment of the present invention.

Upon receiving an image in step 500, the parameter determiner 130 determines in step 501 whether the input image is a person image. If it is, the parameter determiner 130 proceeds to step 504. Otherwise, the parameter determiner 130 determines a parameter reference value greater than a quantified definition value and a parameter reference value greater than a quantified chroma value using a quantification value comparison table in step 502.

In step 503, the parameter determiner 130 calculates definition and chroma parameters by interpolation.

The parameter determiner 130 determines a parameter reference value greater than a quantified definition value, a parameter reference value greater than a quantified chroma value, and definition and chroma parameters calculated by interpolation, as applicable parameters for quality improvement.

In step 504, the parameter determiner 130 determines definition and chroma parameters for a person image corresponding to the calculated quantified values using a preset quantification value comparison table for a person image.

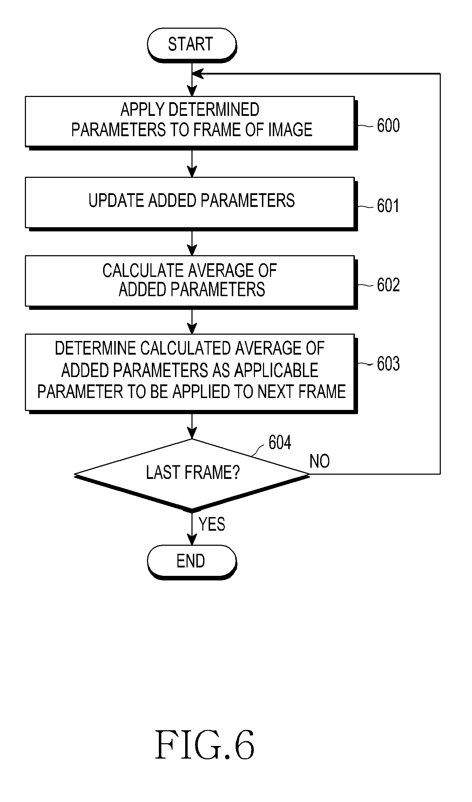

FIG. 6 illustrates a flowchart for applying determined applicable parameters to an image in a parameter applier 140 according to an embodiment of the present invention.

In step 600, the parameter applier 140 applies the parameters determined by the parameter determiner 130 to frames of the input image.

To avoid screen flickering due to the quality difference between the current frame and the next frame, the parameter applier 140 updates the added parameters using the applied parameters in step 601. In other words, the parameter applier 140 adds the parameters calculated from a preset number of frames.

In step 602, the parameter applier 140 calculates an average of the added parameters.

In step 603, the parameter applier 140 determines the calculated average of parameters as an applicable parameter to be applied to the next frame.

In step 604, the parameter applier 140 determines whether it has applied the parameter to the last frame of the input image. If it has, the parameter applier 140 completes the applying of the parameter. Otherwise, the parameter applier 140 returns to step 600 to apply the parameter to the frame of the input image, and performs steps 601 to 604.

For example, Equation (7) below is used in converting an RGB image into an YCbCr image for definition improvement and using unsharp mask filtering for the Y channel.

$$out_Y = (1 + \lambda) \cdot in_Y - \lambda \cdot (in_Y * F_{blur}) \dots \dots \dots (7)$$

where $in_Y$ and $out_Y$ represent an input image and a resulting image of a Y channel, respectively, $F_{blur}$ represents a filter used for blurring, and $\lambda$ represents a definition improvement parameter.

Additionally, Equation (8) below is used in converting an RGB image into an LCH image for chroma improvement and adding chroma (C) to six hue (H) periods.

$$out_C = in_C + \Delta C \dots \dots \dots (8)$$

where $in_C$ and $out_C$ represent an input image and a resulting image of a C channel, respectively, and $\triangle C$ represents a chroma improvement parameter.

Accordingly, in the case of an input image with a person image, if high-definition and chroma parameters are applied thereto, the contours of the face portion may be excessively emphasized, causing a decrease in the image quality. The excessive emphasis of the contours is prevented by applying the proposed parameters for a person image.

Additionally, in the case of a non-person image, if high-definition and chroma parameters are applied thereto, the image quality is reduced due to the excessive emphasis of edges. The excessive emphasis of edges is prevented by applying the low-definition and chroma parameters.

Further, if the quantified values of an image are low, the image quality is improved by applying high-definition and chroma parameters.

As is apparent from the foregoing description, the present invention may quantify definition and chroma depending on whether the input image is a person image, and perform quality improvement for the definition and chroma according to the quantified values, thereby optimizing the quality of the output image.

Moreover, the present invention may optimize the image quality corresponding to the output environment by adjusting the parameter values depending on the output environment such as display performance and input image's quality.

While the invention has been shown and described with reference to certain embodiments thereof, it will be understood by those skilled in the art that various changes in form and details may be made therein without departing from the spirit and scope of the invention as defined by the appended claims and their equivalents.

**Claims**

1. An apparatus for improving image quality based on definition and chroma, the apparatus comprising:

    an image analyzer for analyzing an input image;
    a quantification unit for calculating a quantified definition value and a quantified chroma value of the input image;
    a parameter determiner for determining a definition parameter corresponding to the quantified definition value and a chroma parameter corresponding to the quantified chroma value; and
    a parameter applier for applying the determined definition parameter and the determined chroma parameter to a frame of the input image.

2. The apparatus of claim 1, wherein the image analyzer determines whether the input image is a person image based on a skin color predetermined by a color extracted from multiple skin color images.

3. The apparatus of claim 2, wherein the image analyzer calculates a ratio of pixels corresponding to the predetermined skin color of the input image, and determines the input image to be a person image if the calculated ratio of pixels is greater than or equal to a preset threshold.

4. The apparatus of claim 1, wherein the quantification unit detects edges from a frame of the input image in vertical and horizontal directions, calculates edge strength based on the detected edges, determines whether the calculated edge strength is greater than or equal to a preset threshold, calculates a sum of edge strengths if the calculated edge strength is greater than or equal to the preset threshold, and calculates the quantified definition value obtained by dividing the calculated sum of edge strengths by a size of the input image.

5. The apparatus of claim 1, wherein the quantification unit distinguishes pixel colors for the input image based on hue values of pixels of the input image, calculates a sum of chroma obtained by adding chroma of pixels whose value is greater than or equal to a preset value corresponding to the distinguished pixel colors, and calculates the quantified chroma value by dividing the calculated sum of chroma by the number of pixels corresponding to the distinguished pixel colors.

6. The apparatus of claim 1, wherein, if the input image is a person image, the parameter determiner determines a definition parameter for the person image and the determined chroma parameter for the person image as the definition parameter and the determined chroma parameter using a quantification value comparison table preset for the person image.

7. The apparatus of claim 1, wherein if the input image is not a person image, the parameter determiner determines a parameter reference value over the quantified definition value and the parameter reference value over the quantified chroma value using a preset quantification value comparison table, calculates the definition parameter and the determined chroma parameter by interpolation, and determines the parameter reference value over the quantified definition value, the parameter reference value over the quantified chroma value, the definition parameter, and the determined chroma parameter as the definition parameter and the determined chroma parameter .

8. The apparatus of claim 1, wherein the parameter applier updates the added parameters using the applied definition parameter and the determined chroma parameter , calculates an average of the updated added parameters, and determines the calculated average of added parameters as a parameter to be applied to a next frame of the input image.

9. A method for improving image quality based on definition and chroma, the method comprising:

    analyzing an input image;
    calculating a quantified definition value and a quantified chroma value for the input image;

determining a definition parameter corresponding to the quantified definition value and a chroma parameter corresponding to the quantified chroma value; and

applying the determined definition parameter and the determined chroma parameter to a frame of the input image.

**10.** The method of claim 9, wherein analyzing whether the input image is a person image comprises:

calculating a ratio of pixels corresponding to the predetermined skin color of the input image; and
determining the input image as the person image if the calculated ratio of pixels is greater than or equal to a preset threshold .

**11.** The method of claim 9, wherein calculating the quantified definition value comprises:

detecting edges from a frame of the input image in vertical and horizontal directions;
calculating edge strength based on the detected edges;
determining whether the calculated edge strength is greater than or equal to a preset threshold, and calculating a sum of edge strengths if the calculated edge strength is greater than or equal to the preset threshold; and
calculating the quantified definition value obtained by dividing the calculated sum of edge strengths by a size of the input image.

**12.** The method of claim 9, wherein calculating the quantified definition value comprises:

distinguishing pixel colors for the input image based on hue values of pixels of the input image;
calculating a sum of chroma obtained by adding chroma of pixels whose value is greater than or equal to a preset value corresponding to the distinguished pixel colors; and
calculating the quantified chroma value by dividing the calculated sum of chroma by the number of pixels corresponding to the distinguished pixel colors.

**13.** The method of claim 9, wherein determining parameters comprises, if the input image is a person image, determining a definition parameter for the person image and the determined chroma parameter for the person image as the definition parameter and the determined chroma parameter using a quantification value comparison table preset for the person image.

**14.** The method of claim 9, wherein determining parameters comprises:

if the input image is not a person image, determining a parameter reference value over the quantified definition value and a parameter reference value over the quantified chroma value using a preset quantification value comparison table; and
calculating a definition parameter and the determined chroma parameter by interpolation, and determining the parameter reference value over a quantified definition value, the parameter reference value over a quantified chroma value, the definition parameter, and the determined chroma parameter as the definition parameter and the determined chroma parameter.

**15.** The method of claim 9, wherein applying parameters to a frame of the input image comprises:

updating the added parameters using the applied definition parameter and the determined chroma parameter ;
calculating an average of the updated added parameters; and
determining the calculated average of added parameters as a parameter to be applied to a next frame of the input image.

FIG.1

START

RECEIVE IMAGE — 200

201
PERSON IMAGE? — NO

YES

DETERMINE DEFINITION
PARAMETER FOR PERSON IMAGE — 204

QUANTIFY DEFINITION
AND CHROMA — 202

DETERMINE CHROMA
PARAMETER FOR PERSON IMAGE — 205

DETERMINE DEFINITION PARAMETER
AND CHROMA PARAMETER — 203

APPLY DETERMINED
DEFINITION PARAMETER — 206

APPLY DETERMINED
CHROMA PARAMETER — 207

OUTPUT PARAMETER-APPLIED
IMAGE — 208

END

FIG.2

START

RECEIVE IMAGE — 300

DETECT EDGE IN VERTICAL
AND HORIZONTAL DIRECTIONS — 301

CALCULATE EDGE STRENGTH
USING DETECTED EDGE — 302

303
EDGE STRENGTH ≥
THRESHOLD?    YES

NO

CALCULATE
SUM OF EDGE STRENGTH — 304

305
LAST PIXEL?    NO

YES

CALCULATE QUANTIFIED
DEFINITION VALUE OBTAINED
BY DIVIDING CALCULATED
SUM OF EDGE
STRENGTH BY IMAGE SIZE — 306

END

FIG.3

START

RECEIVE IMAGE — 400

401
330° ≤ hue < 37° — YES → 402
CALCULATE SUM OF CHROMA OF RED AREA,
AND CALCULATE SUM OF NUMBER OF RED PIXELS

NO

403
37° ≤ hue < 103° — YES → 404
CALCULATE SUM OF CHROMA OF YELLOW AREA,
AND CALCULATE SUM OF NUMBER OF YELLOW PIXELS

NO

405
103° ≤ hue < 136° — YES → 406
CALCULATE SUM OF CHROMA OF GREEN AREA,
AND CALCULATE SUM OF NUMBER OF GREEN PIXELS

NO

407
136° ≤ hue < 197° — YES → 408
CALCULATE SUM OF CHROMA OF CYAN AREA,
AND CALCULATE SUM OF NUMBER OF CYAN PIXELS

NO

409
197° ≤ hue < 307° — YES → 410
CALCULATE SUM OF CHROMA OF BLUE AREA,
AND CALCULATE SUM OF NUMBER OF BLUE PIXELS

NO

411
370° ≤ hue < 330° — YES → 412
CALCULATE SUM OF CHROMA OF MAGENTA AREA,
AND CALCULATE SUM OF NUMBER OF MAGENTA PIXELS

NO

NO
413
LAST PIXEL?

YES

DERIVE QUANTIFIED VALUE OF EACH
COLOR BY DIVIDING SUM
OF CHROMA OF EACH COLOR BY NUMBER
OF PIXELS FOR EACH COLOR — 414

END

FIG.4

FIG.5

START

APPLY DETERMINED
PARAMETERS TO FRAME OF IMAGE — 600

UPDATE ADDED PARAMETERS — 601

CALCULATE AVERAGE OF
ADDED PARAMETERS — 602

DETERMINE CALCULATED AVERAGE OF
ADDED PARAMETERS AS APPLICABLE — 603
PARAMETER TO BE APPLIED TO NEXT FRAME

604
LAST FRAME? NO

YES

END

FIG.6